# EUROPÄISCHE PATENTSCHRIFT

(11) **EP 3 658 374 B1**
(45) Veröffentlichungstag und Bekanntmachung des Hinweises auf die Patenterteilung: **06.04.2022**
(21) Anmeldenummer: 18765355.5
(22) Anmeldetag: 21.07.2018
(51) Int. Cl.: B32B 37/14, B65B 9/02, B65B 9/06, B65D 75/30, B65D 75/54, B65H 20/16, B29C 65/02, B32B 38/06

(54) **VORRICHTUNG UND VERFAHREN ZUR HERSTELLUNG VON SIEGELRANDBEUTELN**
DEVICE AND METHOD FOR PRODUCING SEALED EDGE BAGS
DISPOSITIF ET PROCÉDÉ DE FABRICATION DE SACS À BORDS SCELLÉS

(30) Priorität: 26.07.2017 DE 102017006991
(43) Veröffentlichungstag der Anmeldung: 03.06.2020
(73) Patentinhaber: LTS Lohmann Therapie-Systeme AG, 56626 Andernach (DE)
(72) Erfinder: SCHUMANN, Klaus, 56567 Neuwied (DE); BÖHM, Rolf, 56271 Kleinmaischeid (DE); GRUNENBERG, Torsten, 56645 Nickenich (DE); GRÜNES, Bernd, 53177 Bonn (DE); BEE, Markus, 56220 Kettig (DE); SCHLÜTER, Anna, 53343 Wachtberg (DE)
(74) Vertreter: dompatent von Kreisler Selting Werner - Partnerschaft von Patent- und Rechtsanwälten mbB
(86) Internationale Anmeldenummer: PCT/DE2018/000222
(87) Internationale Veröffentlichungsnummer: WO 2019/020139

(56) Entgegenhaltungen:
- DE-A1- 3 921 434
- DE-A1- 19 830 898
- DE-C1- 19 902 196
- DE-T2- 69 811 054

## Beschreibung

Die Erfindung betrifft ein Verfahren zur Herstellung eines Siegelrandbeutels mit einem darin gelagerten Laminatverbund, eine Vorrichtung zur Herstellung eines Siegelrandbeutels gemäß diesem Verfahren sowie einen nach diesem Verfahren hergestellten Siegelrandbeutel.

Aus der DE 39 21 434 A1 sind Siegelrandbeutel bekannt. Um bei langer Lagerung ein Verkleben des Substrats mit dem Packstoff zu verhindern, sind in dem das Substrat umgebenden Bereich der Trägerfolie Noppen oder Ringe eingeprägt.

DE 698 11 054 T2 zeigt eine Vorrichtung und ein Verfahren zur Herstellung von Siegelrandbeuteln des Stands der Technik. Es werden flächenförmige Flicken in einen Packbeutel gepackt, von denen jede eine auf einem Substrat gebildete Packmittelschicht aufweist, die mit einer Deckschicht bedeckt ist, wobei sie an der Innenoberfläche des Packbeutels durch die Deckschicht angebracht sind. Das Paket der flächenförmigen Flicken kann hergestellt werden, indem z. B. flächenförmige Flicken angebracht werden, die dadurch vorbereitet sind, indem eine Packmittelschicht auf einem Substrat gebildet wird, diese mit einer Deckschicht bedeckt wird, und das so beschichtete Substrat in einzelne Flicken geschnitten werden, die eine erwünschte Form aufweisen, und auf eine innere Oberfläche eines Packfilms durch die Deckschicht eines jeden Flickens mit Hilfe eines Haftmittels oder einer elektrostatischen Kraft angebracht werden, und anschließend der Film abgedichtet wird, um einen Packbeutel herzustellen.

Der vorliegenden Erfindung liegt das Problem zugrunde, ein Verfahren und eine Vorrichtung für die automatisierte Herstellung von Siegelrandbeuteln zu entwickeln.

Diese Problemstellung wird mit den Merkmalen des Hauptanspruchs gelöst. Dazu wird der Laminatverbund von einer eine Trägerfolie mit darauf angeordneten, mittels jeweils einer Abdeckfolie abgedeckten Substraten aufweisenden Laminatverbundbahn abgetrennt. Ein Zwischenkörper wird der Laminatverbundbahn oder dem Laminatverbund zugeführt oder in die Trägerfolie der Laminatverbundbahn eingeformt, sodass der oder die Zwischenkörper sämtliche freie Oberflächen des Substrats zumindest bereichsweise umgeben. Der Laminatverbund und sämtliche Zwischenkörper werden zwischen zwei Packstoffbahnen eingeführt. Die Packstoffbahnen werden miteinander versiegelt. Abschließend werden die Siegelrandbeutel vereinzelt.

In der Vorrichtung ist mittels einer ersten Fördervorrichtung eine Laminatverbundbahn, die eine Trägerfolie und darauf sitzende, mit jeweils einer Abdeckfolie versehene, zumindest klebstoffhaltige Substrate aufweist, förderbar. Mittels einer ersten Trennvorrichtung sind jeweils mindestens ein Substrat aufweisende Laminatverbünde von der Laminatverbundbahn abtrennbar. Mittels einer Umformvorrichtung sind Zwischenkörper in die Trägerfolie der Laminatverbundbahn einformbar oder die Vorrichtung weist eine Umlenkvorrichtung auf, sodass die Laminatverbundbahn oder ein Laminatverbund mittels eines Zwischenkörpers überdeckbar sind. An einer Packstation sind die Laminatverbünde einschließlich der Zwischenkörper zwischen zwei Packstoffbahnen einführbar. An einer Siegelstation sind die beiden Packstoffbahnen außerhalb der projizierten Fläche des Laminatverbunds miteinander fügbar. Die gefügten Packstoffbahnen sind mittels einer zweiten Fördervorrichtung förderbar. Außerdem sind mittels einer zweiten Trennvorrichtung jeweils mit einem Laminatverbund befüllte Siegelrandbeutel abtrennbar.

Die Siegelrandbeutel beinhalten mindestens ein Substrat, dessen Dicke zwischen der Dreifachen und dem Siebenfachen der Dicke eines Trägerfolienabschnitts der Trägerfolie beträgt. Der Trägerfolienabschnitt besteht aus zwei sich bereichsweise überlappenden Teil-Trägerfolienabschnitten. Außerdem ist der Siegelrandbeutel ein Vierrand-Siegelbeutel.

Die folgenden Ausführungsbeispiele beschreiben Verfahren und Vorrichtungen, mit denen auch bei dicken klebstoffhaltigen Substraten ein Verkleben des Substrats mit den Packstoffen, z.B. durch kalten Fluss, verhindert wird. Der Anwender kann somit unmittelbar vor der Anwendung den das Substrat enthaltenden Laminatverbund problemlos aus dem Siegelrandbeutel entnehmen.

Bei der Herstellung des Siegelrandbeutels wird ein Einreißen, ein Durchbrechen oder eine sonstige Beschädigung der eingesetzten Folien, die Teil des Laminatverbunds sind, verhindert. Damit ist sowohl eine sichere, wiederholbare Herstellung als auch ein problemloses Entnehmen des Laminatverbunds mit einem dicken Substrat gewährleistet.

Weitere Einzelheiten der Erfindung ergeben sich aus den Unteransprüchen und den nachfolgenden Beschreibungen schematisch dargestellter Ausführungsbeispiele.
- Figur 1:: Schematische Darstellung eines ersten Ausführungsbeispiels;
- Figur 2:: Vorbereiten des zu verpackenden Guts aus Figur 1;
- Figur 3:: Teilschnitt einer Kaltumformvorrichtung;
- Figur 4:: Teillängsschnitt des zu verpackenden Guts aus Figur 1;
- Figur 5:: Zu verpackendes Gut aus Figur 1;
- Figur 6:: Teillängsschnitt einer Verpackungseinheit aus Figur 1;
- Figur 7:: Schematische Darstellung eines zweiten Ausführungsbeispiels;
- Figur 8:: Vorbereiten des zu verpackenden Guts aus Figur 7,
- Figur 9:: Teillängsschnitt des zu verpackenden Guts aus Figur 7;
- Figur 10:: Teillängsschnitt einer Verpackungseinheit aus Figur 7;
- Figur 11:: Vorbereiten des zu verpackenden Guts nach einem dritten Ausführungsbeispiel;
- Figur 12:: Vorbereiten des zu verpackenden Guts nach einem vierten Ausführungsbeispiel;
- Figur 13:: Zu verpackendes Gut nach dem Ausführungsbeispiel aus Figur 12;
- Figur 14:: Variante des Ausführungsbeispiels aus Figur 11;
- Figur 15:: Variante des Ausführungsbeispiels aus Figur 12;
- Figur 16:: Teillängsschnitt einer Verpackungseinheit nach Figuren 14 und 15;
- Figur 17:: Schematische Darstellung eines fünften Ausführungsbeispiels;
- Figur 18:: Teillängsschnitt einer Verpackungseinheit nach Figur 17;
- Figur 19:: Transdermales therapeutisches System.

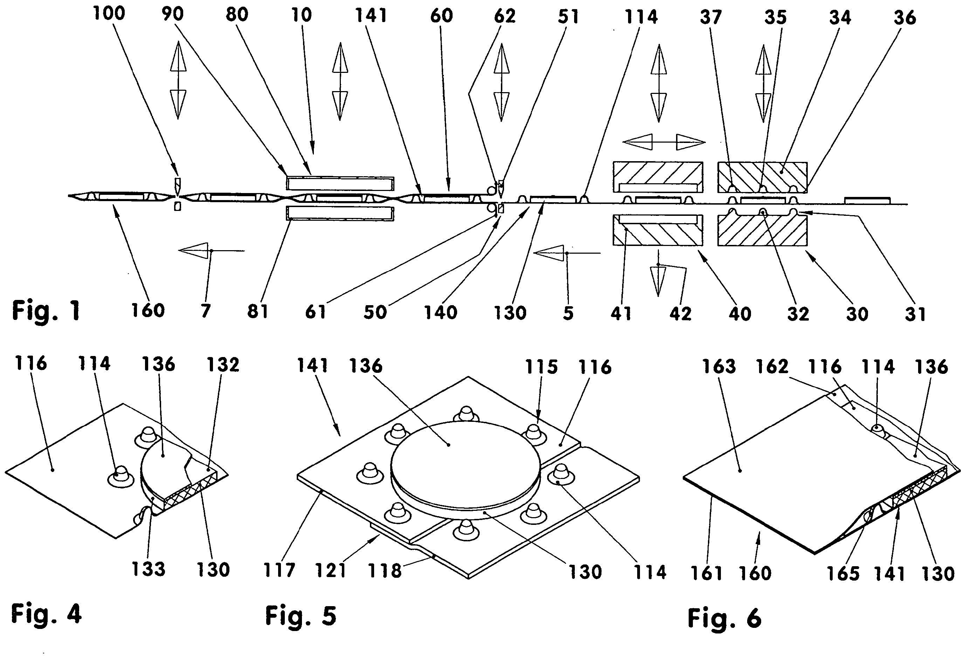

Die Figur 1 zeigt eine schematische Darstellung einer Vorrichtung (10) zum Verpacken klebstoffhaltiger Substrate (130) in Siegelrandbeutel (160). Die klebstoffhaltigen Substrate (130) sitzen z.B. in der Breitenrichtung (6) mittig auf einer Trägerfolie (110), einem sogenannten Release Liner. In der Breitenrichtung (6) ist die Trägerfolie (110) breiter als das einzelne Substrat (130). Die Trägerfolie (110) wird zusammen mit dem Substrat (130) mittels einer ersten Fördervorrichtung (40) getaktet in eine Förderrichtung (5) transportiert.

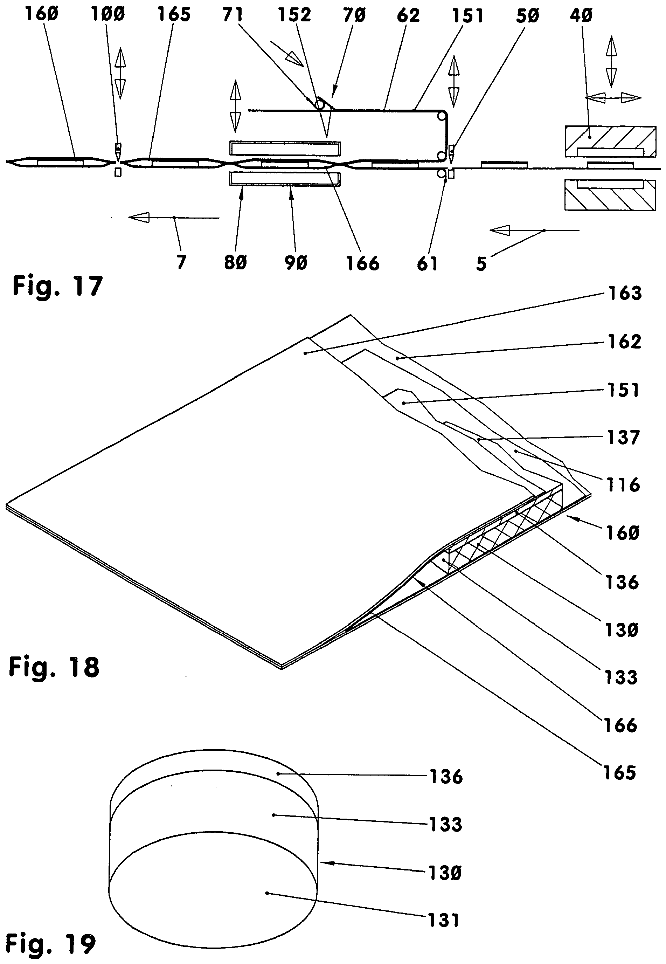

Das einzelne klebstoffhaltige Substrat (130) kann auch wirkstoffhaltig sein. Beispielsweise kann es als transdermales therapeutisches System ausgebildet sein. Im Ausführungsbeispiel, vgl. Figur 19, hat das Substrat (130) eine zylinderförmige Gestalt, wobei seine Stirnfläche (131) die auf der Trägerfolie (110) sitzende Grundfläche bildet. Seine Höhe, die Dicke des Substrats (130) beträgt beispielsweise zwischen 50 Mikrometern und 700 Mikrometern, z.B. zwischen 300 Mikrometern und 500 Mikrometern. Das Substrat (130) ist z.B. homogen ausgebildet. Bezogen auf den genutzten Teil der Oberfläche (111) der Trägerfolie (110) hat das Substrat (130) beispielsweise eine spezifische Masse von 400 Gramm pro Quadratmeter.

Das Substrat (130) kann auch die Gestalt eines Ellipsoids, eines Quaders, eines Würfels, eines Prismas, etc. aufweisen. Beispielsweise sind in allen Ausführungsbeispielen die der Trägerfolie (110) zugewandte Stirnfläche (131) und die der Trägerfolie (110) abgewandte Stirnseite (132), vgl. Figur 4 parallel zueinander und zueinander kongruent ausgebildet.

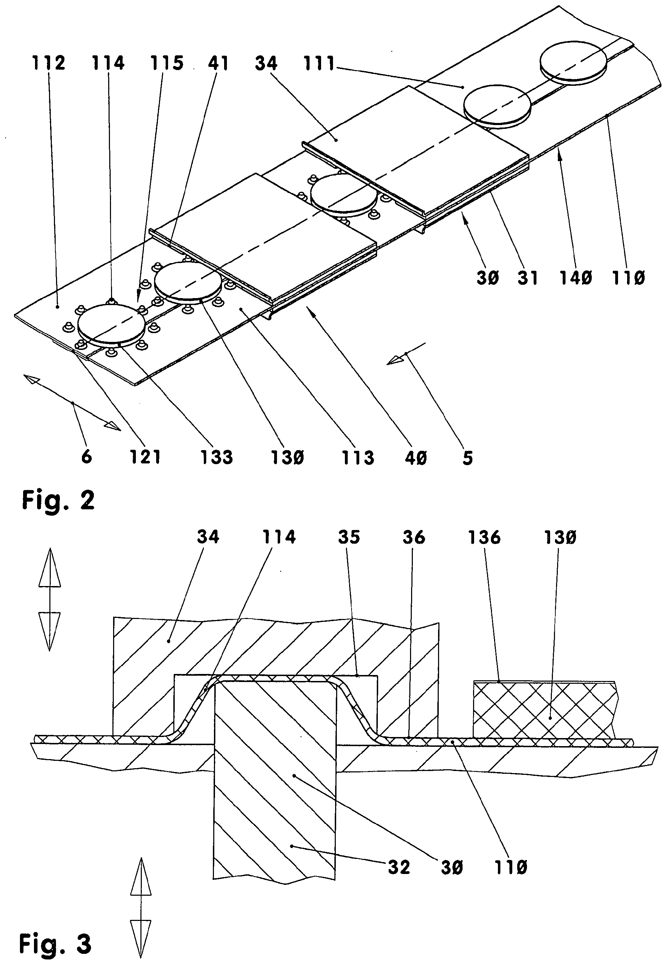

Die Trägerfolie (110), vgl. Figur 2, besteht beispielsweise aus zwei sich bereichsweise überlappenden Teil-Trägerfolien (112, 113). Die Überlappung (121) ist beispielsweise symmetrisch zur vertikalen Mittenlängsebene der Trägerfolie (110) orientiert. Die Breite der Überlappung (121) beträgt z.B. zwischen 5 % und 30 % der Breite der Trägerfolie (110) in der Breitenrichtung (6). Die Längsrichtung der Trägerfolie (110) ist in der Förderrichtung (5) orientiert. Die Teil-Trägerfolien (112, 113) haben beispielsweise eine Dicke von 100 Mikrometern. Im Ausführungsbeispiel sind sie aus Polyethylenterephthalat (PET) hergestellt. Sie können dehäsiv eingestellt sein. Beispielsweise ist zumindest die dem Substrat (130) zugewandte Oberfläche (111) silikonisiert.

Auf der der Trägerfolie (110) abgewandten Stirnseite (132) des Substrats (130) ist vollflächig eine Abdeckfolie (136), ein sogenannter backing layer, angeordnet. Beispielsweise haftet die Abdeckfolie (136) am Substrat (130). Ihre in einer Normalprojektion auf die Trägerfolie (110) projizierte Oberfläche (137) entspricht der der Fläche der Stirnseite (132), sodass die Abdeckfolie (136) nicht über das Substrat (130) übersteht. Die Abdeckfolie (136) besteht im Ausführungsbeispiel aus dem gleichen Werkstoff wie die Trägerfolie (110). Die Dicke der Abdeckfolie (136) beträgt beispielsweise 23 Mikrometer.

Alle Oberflächen des Substrats (130), die nicht mit der Trägerfolie (110) oder der Abdeckfolie (136) in Kontakt sind, sind freie Oberflächen (133). Das in diesem Ausführungsbeispiel dargestellte Substrat (130) hat eine freie Oberfläche (133). Dies ist die Zylindermantelfläche.

Die Trägerfolie (110) mit den darauf angeordneten, jeweils eine Abdeckfolie (136) tragenden Substraten (130) bildet eine Laminatverbundbahn (140). Beim Fördern dieser Laminatverbundbahn (140) in der Förderrichtung (5) wird die Trägerfolie (110) mittels Transportbacken (41) der Fördervorrichtung (40) gegriffen und verschoben. Nach dem Lösen der Transportbacken (41) in der Löserichtung (42) steht die Trägerfolie (110) still. Die Transportbacken (41) werden in die Ausgangsposition zurückbewegt. Hier greifen sie erneut die Trägerfolie (110). Der Förderhub der Fördervorrichtung (40) entspricht beispielsweise dem Mittenabstand zweier Substrate (130) auf der Trägerfolie (110). Bei einer mehrnutzigen Vorrichtung (10) kann der Förderhub auch ein Vielfaches dieses Abstands sein. Die Hubhöhe der Transportbacken (41) normal zur Trägerfolie (110) ist z.B. größer als die Summe der Höhen des Substrats (130) und der Abdeckfolie (136). Die Hubfrequenz der Fördervorrichtung (40) beträgt beispielsweise 5500 - 6000 Hübe pro Stunde.

Der Fördervorrichtung (40) ist in der Darstellung der Figuren 1 und 2 eine Umformvorrichtung (30) in der Bauform einer Prägevorrichtung (30) vorgeschaltet. Diese Prägevorrichtung (30) weist einen Stempelverbund (31) mit beispielsweise acht Stempeln (32) und eine Matrize (34) auf, die beide in Normalenrichtung zur Trägerfolie (110) aufeinander zu und voneinander weg verfahrbar sind. Die Matrize (34) hat gleichartig ausgebildete, z.B. entlang eines Teilkreises angeordnete Ausnehmungen (35). Diese haben beispielsweise die Gestalt eines Kegels, dessen Erzeugende z.B. tangential in die Grundfläche (36) der Matrize (34) übergeht. Die Kegelspitze (37) ist kugelabschnittsförmig ausgebildet. Der Durchmesser des in der Ebene der Grundfläche (36) liegenden Kegelgrundes ist beispielsweise größer als die Hälfte der Tiefe der Ausnehmung (35). Der Stempel (32) ist analog hierzu ausgebildet.

Beim Zusammenfahren des Stempelverbunds (31) und der Matrize (34) wird die Trägerfolie (110) mittels der Stempel (32) in die Ausnehmungen (35) der Matrize (34) gepresst. Die Trägerfolie (110) wird dabei lokal plastisch verformt, sodass beim Rückhub der Prägevorrichtung (30) Noppen (114) in der Trägerfolie (110) verbleiben. Die maximale Dehnung der Trägerfolie (110) ist hierbei geringer als die Reißdehnung. Die Höhe dieser beispielsweise kegelförmig ausgebildeten Noppen (114) ist höher als die Summe der Dicken des Substrats (130) und der Abdeckfolie (136). Bei jedem Prägehub werden beispielsweise acht Noppen (114) erzeugt, die die Mantelfläche (133) des Substrats (130) umgeben. Der so hergestellte Noppenkreis (115) hat z.B. eine gleichmäßige Teilung. Der Noppenkreis (115) kann so ausgebildet sein, dass ein oder mehrere Noppen (114) in dem überlappenden Teil der Teil-Trägerfolien (112, 113) eingeformt werden.

Die Figur 3 zeigt einen Teilschnitt einer weiteren Umformvorrichtung (30). Die einzelne Ausnehmung (35) der Matrize (34) ist zylindrisch ausgebildet. Ihr Durchmesser beträgt beispielsweise das 30-fache der Dicke der Transportfolie (110). Am Übergang zur Grundfläche (36) ist die Ausnehmung (35) abgerundet ausgebildet.

Jeder einzelne Stempel (32) ist ebenfalls zylindrisch ausgebildet. Er hat eine abgerundete Umlaufkante. Sein Durchmesser beträgt beispielsweise die Hälfte des Durchmessers der Ausnehmung. Dieses Durchmesserverhältnis kann zwischen 0,375 und 0,75 liegen. Bei einem niedrigeren Verhältnis als dem angegebenen Minimalwert kann die Trägerfolie (110) zum Recken neigen. Wird der genannte Maximalwert überschritten, besteht die Gefahr des Ausreißens von Noppen (114).

In den beschriebenen Ausführungsformen werden zum Einformen der Noppen (114) Kaltumformverfahren eingesetzt. Hierbei wird eine Schädigung des Substrats (130) durch Wärmeeinflüsse vermieden. Außerdem haben die Noppen (114) beim Kaltumformen nach dem Rückhub der Umformvorrichtung (30) nur eine geringe Rückverformung.

Die Umformvorrichtung (30) kann während des Stillstands der Fördervorrichtung (40) aktiviert werden. Es ist aber auch denkbar, den Umformvorgang während des Förderhubs durchzuführen. In diesem Fall ist die Umformvorrichtung (30) in der Förderrichtung (5) und entgegen der Förderrichtung (5) verfahrbar. Hierbei kann die Umformvorrichtung (30) mit der Fördervorrichtung (40) gekoppelt sein. Es ist auch denkbar, die Umformvorrichtung (30) in die Fördervorrichtung (40) zu integrieren. Eine derartige Vorrichtung weist ein kombiniertes Förder- und Umformwerkzeug auf. Die Noppen (114) werden beim Schließen der Transportbacken (41) geformt. Die Schließgeschwindigkeit des Werkzeugs ist hierbei z.B. einstellbar. Damit kann ein Einreißen der Trägerfolie (110) verhindert werden. Die Trägerfolie (110) mit dem darauf angeordneten Substrat (130) weist beim Fördern keine Bereiche unterschiedlicher Elastizität auf. Damit kann die Trägerfolie (110) ohne Schlupf gefördert werden.

Bei einer der Umformvorrichtung (30) nachgeschalteten Fördervorrichtung (40) sind die Transportbacken (41) so ausgebildet, dass sie die Noppen (114) umgreifen. Beispielsweise haben die Transportbacken (41) eine hohlzylinderabschnittsförmige Innenkontur. Sowohl die Umformvorrichtung (30) als auch die Fördervorrichtung (40) können mehrnutzig ausgebildet sein.

Mittels der Fördervorrichtung (40) wird die Trägerfolie (110) zu einer Trennvorrichtung (50) weitertransportiert. Die Trennvorrichtung (50) umfasst eine Querschneidvorrichtung mit einem Querschneidmesser (51). Die Breite des Querschneidmessers (51) in der Breitenrichtung (6) ist größer als die Breite der Trägerfolie (110).

Beim Betätigen der Trennvorrichtung (50) wird die Trägerfolie (110) vollständig durchtrennt. Hierbei werden einzelne Laminatverbünde (141) hergestellt. Die Figuren 4 und 5 zeigen einen derartigen Laminatverbund (141) in einem isometrischen Teil-Längsschnitt und in einer isometrischen Darstellung. Dieser umfasst einen Trägerfolienabschnitt (116), ein Substrat (130) und eine Abdeckfolie (136). Der hier unten dargestellte Trägerfolienabschnitt (116) besteht in diesem Ausführungsbeispiel aus zwei sich bereichsweise überlappenden Teil-Trägerfolienabschnitten (117, 118) mit darin eingeformten Noppen (114). Das Verhältnis der Überlappung (121) zur Breite des Laminatverbunds (141) entspricht in diesem Ausführungsbeispiel dem Verhältnis der Breite der Überlappung (121) zur Breite der Trägerfolie (110).

Die Noppen (114) umgeben die freie Oberfläche (133) des Substrats (130). Auf dem Substrat (130) klebt die Abdeckfolie (136).

Der so vereinzelte Laminatverbund (141) wird in der nachfolgenden Packstation (60) verpackt. An die Packstation (60) werden eine untere Packstoffbahn (61) und eine obere Packstoffbahn (62) zugeführt. Zwischen diese beiden Packstoffbahnen (61, 62) wird das zu verpackende Gut (141), also der Laminatverbund (141) zugeführt. Nach dem Zuführen liegt der Laminatverbund (141) mit dem Trägerfolienabschnitt (116) auf der unteren Packstoffbahn (61) auf. Die obere Packstoffbahn (62) liegt auf der Abdeckfolie (136) und auf den Noppen (114) auf. Außerhalb des Trägerfolienabschnitts (116) liegt die obere Packstoffbahn (62) auf der unteren Packstoffbahn (61) auf. Im Ausführungsbeispiel ist die Transportrichtung (7) einer die Packstoffbahnen (61, 62) fördernden zweiten Fördervorrichtung (90) identisch mit der Förderrichtung (5) der ersten Fördervorrichtung (40). Auch die zweite Fördervorrichtung (90) ist ein Unstetigförderer.

In einer nachgeschalteten Siegelstation (80) werden die obere (62) und die untere Packstoffbahn (61) miteinander versiegelt. Beispielsweise werden die beiden Packstoffbahnen (61, 62) an allen vier, den Laminatverbund (141) umgebenden Rändern miteinander verschweißt. Die so hergestellten Siegelnähte (161) umgeben damit die in einer Normalenprojektion auf die Packstoffbahnen (61, 62) projizierte Fläche des Laminatverbunds (141). Zwischen zwei eingelagerten Laminatverbünden (141) befinden sich jeweils zwei Siegelnähte (161). Diese Siegelnähte (161) können sich berühren oder einen geringen Abstand voneinander aufweisen.

Im Ausführungsbeispiel ist die Siegelstation (80) zusätzlich als zweite Fördervorrichtung (90) ausgebildet. Das Fördern der Packstoffbahnen (61, 62) mit dem darin eingelagerten Laminatverbund (141) erfolgt damit während des Versiegelns der Packstoffbahnen (61, 62). Die Siegelwerkzeuge (81) dienen hierbei als Transportbacken. Nach dem Förderhub werden die Siegelwerkzeuge (81) geöffnet und die Siegelvorrichtung (80) zum Fördern wieder in die Ausgangslage zurück verfahren.

Es ist auch denkbar, die Fördervorrichtung (90) und die Siegelstation (80) im Materialfluss getrennt voneinander anzuordnen. Hierbei ist beispielsweise die Fördervorrichtung (90) der Siegelstation (80) nachgeschaltet. Das Versiegeln der Packstoffbahnen (61, 62) kann dann während des Förderns oder während des Stillstands der zweiten Fördervorrichtung (90) erfolgen.

Die miteinander versiegelten Packstoffbahnen (61, 62) mit dem eingelagerten Laminatverbund (141) werden zu einer zweiten Trennvorrichtung (100) gefördert. Die zweite Trennvorrichtung (100) ist beispielsweise so aufgebaut wie die erste Trennvorrichtung (50). Beim Betätigen der zweiten Trennvorrichtung (100) durchtrennt diese die beiden Packstoffbahnen (61, 62) zwischen den beiden nebeneinanderliegenden Siegelnähten (161). Damit werden Siegelrandbeutel (160) vereinzelt, die jeweils einen Laminatverbund (141) beinhalten. Der einzelne Siegelrandbeutel (160) hat einen unteren Packstoff (162) und einen oberen Packstoff (163), die jeweils mittels vier Siegelnähten (161) miteinander gefügt sind.

Die Figur 6 zeigt in einer isometrischen Ansicht einen Teillängsschnitt eines derartigen Siegelrandbeutels (160). Die Dicke des Substrats (130) beträgt zwischen dem Dreifachen und dem Siebenfachen des Trägerfolienabschnitts (116). Auf dem Trägerfolienabschnitt (116) klebt das klebstoffhaltige Substrat (130), auf dessen Stirnseite (132) die Abdeckfolie (136) angeordnet ist. Hierbei umgeben die Noppen (114) als Zwischenkörper (165) die freie Oberfläche (133) des Substrats (130), sodass ein Kontakt einer der Packstoffbahnen (61, 62) mit dem Substrat (130) verhindert wird.

Um das Substrat (130) anzuwenden, reißt der Anwender den Siegelrandbeutel (160) auf, der hierfür Sollbruchstellen aufweisen kann. Der Anwender kann nun den Laminatverbund (141) problemlos entnehmen. Das Substrat (130) hat keinen Kontakt mit den Packstoffen (162, 163). Nun kann der Anwender die Teil-Trägerfolienabschnitte (117, 118) vom Substrat (130) abziehen und das Substrat (130) mit seiner Stirnfläche (131) z.B. auf die Haut aufsetzen.

Bei einer geometrischen Verformung des Substrats (130) aufgrund von Temperaturschwankungen, Feuchtigkeitsschwankungen oder Druckanwendung kann z.B. während der Lagerung das Substrat (130) in den Bereich der Noppen (114) verformt werden. Die Größe der Noppen (114), ihre Festigkeit und ihre Anordnung verhindern auch in diesen Fällen einen Kontakt des Substrats (130) mit den Packstoffen (162, 163). Der Laminatverbund (141) kann damit in allen Fällen sicher entnommen werden.

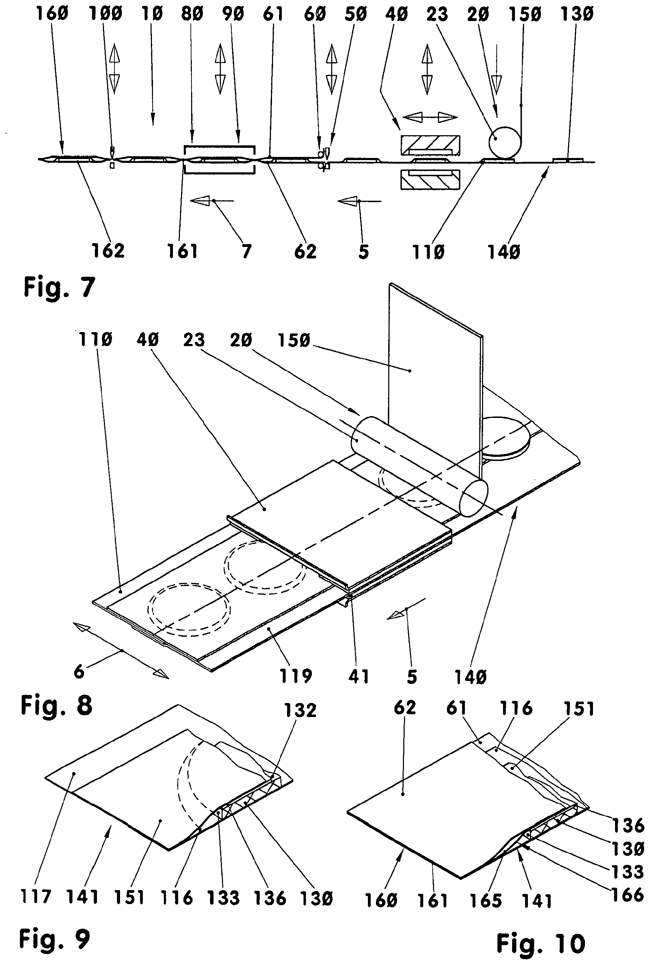

In den Figuren 7 - 10 ist ein zweites Ausführungsbeispiel zum Verpacken klebstoffhaltiger Substrate (130) dargestellt. Die Trägerfolie (110), das Substrat (130) und die Abdeckfolie (136) sind zunächst so ausgebildet und angeordnet, wie im Zusammenhang mit dem ersten Ausführungsbeispiel beschrieben. An die Laminatverbundbahn (140) wird an einer Umlenkvorrichtung (20) mittels einer Umlenkwalze (23) eine Schutzfolie (150) zugeführt. Diese ist beispielsweise aus dem gleichen Werkstoff wie die Trägerfolie (110) hergestellt. Sie kann auf der dem Substrat (130) zugewandten Seite silikonisiert sein und auf der dem Substrat (130) abgewandten Seite nicht silikonisiert ausgebildet sein. Im Ausführungsbeispiel ist die Schutzfolie (150) in der Breitenrichtung (6) breiter als die Summe des Durchmesser des Substrats (130), der doppelten Dicke des Substrats (130) und der doppelten Dicke der Abdeckfolie (136). In der Darstellung der Figuren 8 - 10 ist die Schutzfolie (150) in der Breitenrichtung (6) schmäler ausgebildet als die Trägerfolie (110), sodass die Trägerfolie (110) beidseitig mit einem Transportsteg (119) über die Schutzfolie (150) übersteht. Der Transportsteg (119) hat beispielsweise beidseitig die gleiche Breite, wobei die Schutzfolie (150) symmetrisch zur Mittenlängsrichtung der Substrate (130) liegt. Das einzelne Substrat (130) einschließlich der zugehörigen Abdeckfolie (136) ist damit nach dem Auflegen der Schutzfolie (150) auf allen Seiten verdeckt. In der Figur 8 sind die Wölbungen der Schutzfolie (150) über der Laminatverbundbahn (140) als gestrichelte Linien markiert.

In diesem Ausführungsbeispiel ist die erste Fördervorrichtung (40) so ausgebildet, wie im Zusammenhang mit dem ersten Ausführungsbeispiel beschrieben. Die Fördervorrichtung (40) fördert die Trägerfolie (110) zu einer ersten Trennvorrichtung (50), die so aufgebaut ist wie oben beschrieben. Beim Betätigen der Trennvorrichtung (50) werden die Trägerfolie (110) und die darauf aufliegende Schutzfolie (150) durchtrennt. Die derart vereinzelten Laminatverbünde (141) sind jeweils sind jeweils mittels eines Schutzfolienabschnitts (151) abgedeckt.

Die Figur 9 zeigt dieses Zwischenprodukt nach dem Vereinzeln in einem vertikalen Teillängsschnitt entlang der vertikalen Mittenlängsebene der Trägerfolie (110). Die beiden Teil-Trägerfolienabschnitte (117, 118) überlappen sich in einem Teilbereich in der Breitenrichtung (6). Das Verhältnis der Breite der Überlappung (121) zur Breite des Laminatverbunds (141) entspricht dem im Zusammenhang mit dem ersten Ausführungsbeispiel genannten Verhältnis. Das Substrat (130) liegt mittig auf dem Trägerfolienabschnitt (116), seine Stirnseite (132) ist mittels der Abdeckfolie (136) abgedeckt. Auf der Abdeckfolie (136) und auf dem Transportfolienabschnitt (116) liegt der Schutzfolienabschnitt (151) auf.

In der nachfolgenden Packstation (60) wird dieses Zwischenprodukt zwischen eine untere Packstoffbahn (61) und eine obere Packstoffbahn (62) eingeführt. Hierbei kontaktieren sich die beiden Packstoffbahnen (61, 62) in der Transportrichtung (7) vor dem Trägerfolienabschnitt (116) und hinter dem Trägerfolienabschnitt (116) sowie in der Breitenrichtung (6) beidseits seitlich des Trägerfolienabschnitts (116).

Eine Siegelstation (80) ist auch in diesem Ausführungsbeispiel als zweite Fördervorrichtung (90) ausgebildet. Während des Förderns werden in den Zonen, in denen die untere Packstoffbahn (61) und die obere Packstoffbahn (62) sich berühren, Siegelnähte (161) eingebracht. Die Siegelstation (80) kann auch räumlich getrennt von der zweiten Fördervorrichtung (90) angeordnet sein.

Die miteinander versiegelten Packstoffbahnen (61, 62) mit dem darin eingelagerten Laminatverbund (141) und dem Schutzfolienabschnitt (151) werden zu einer zweiten Trennvorrichtung (100) gefördert. Mittels der zweiten Trennvorrichtung (100) werden hier allseits verschlossene Siegelrandbeutel (160) abgetrennt.

In der Figur 10 ist ein Teil-Längsschnitt eines derartigen Siegelrandbeutels (160) dargestellt. Die obere Packstoffbahn (62) und die untere Packstoffbahn (61) sind in den umlaufenden Siegelnähten (161) des Vierrand-Siegelbeutels (160) miteinander verbunden. Zwischen den beiden Packstoffbahnen (61, 62) ist der Transportfolienabschnitt (116) mit dem Substrat (130), der Abdeckfolie (136) und dem Schutzfolienabschnitt (151) eingeschlossen. Der Schutzfolienabschnitt (151) bildet hierbei einen Zwischenkörper (165), der zwischen der freien Oberfläche (133) des Substrats (130) und den Packstoffbahnen (61, 62) liegt. Seine dem Substrat (130) zugewandte Oberfläche (166) hat die gleichen Hafteigenschaften wie die dem Substrat (130) zugewandte Oberfläche (111) der Trägerfolie (110). Damit besteht auch bei Veränderungen der Umgebungsbedingungen keine Gefahr des Anhaftens des Substrats (130) an den Packstoffen (162, 163).

Das Öffnen des Siegelrandbeutels (160) und der Einsatz des Substrats (130) erfolgen wie oben beschrieben. Hierbei kann der Schutzfolienabschnitt (151) nach der Entnahme des Substrats (130) aus dem Siegelrandbeutel (160) z.B. problemlos und rückstandsfrei entfernt werden.

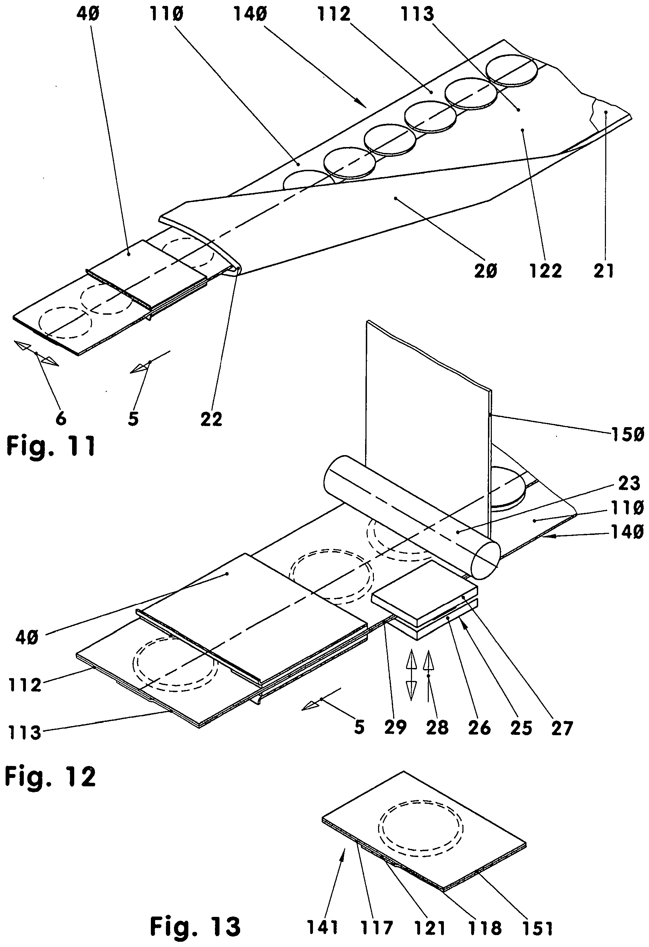

Die Figur 11 zeigt ein weiteres Ausführungsbeispiel zum Vorbereiten der zu verpackenden Substrate (130). Die Trägerfolie (110) hat beispielsweise die doppelte Breite der oben beschriebenen Trägerfolien (110). Hierbei hat die in der Darstellung der Figur 11 links dargestellte Teil-Trägerfolie (112) z.B. die gleichen Abmessungen die in den oben beschriebenen Ausführungsbeispielen beschriebenen Teil-Trägerfolien (112).

Die in dieser Figur 11 rechts dargestellte Teil-Trägerfolie (113) hat in diesem Ausführungsbeispiel die dreifache Breite der linken Teil-Trägerfolie (112). Die Überlappung (121) beider Teil-Trägerfolien (112, 113) ist ausgebildet, wie im Zusammenhang mit den anderen Ausführungsbeispielen beschrieben. Das mit der Abdeckfolie (136) versehene Substrat (130) sitzt auf der Überlappung (121).

In der in der Förderrichtung (5) orientierten Materialflussrichtung (5) ist der ersten Fördervorrichtung (40) eine Umlenkvorrichtung (20) in der Bauform einer Ablenkvorrichtung (20) vorgeschaltet. Diese Ablenkvorrichtung (20) hat eine Leitfläche (21), auf der die Trägerfolie (110) aufliegt. Diese Leitfläche (21) hat einen Bogenabschnitt (22), der mit der Förderrichtung (5) beispielsweise einen Winkel von 15 Grad einschließt. Der Bogenabschnitt (22) überstreicht einen Winkel von 180 Grad. Die beim Fördern an der Leitfläche (21) entlang gleitende Trägerfolie (110) wird damit bereichsweise umgelenkt, sodass der äußere Bereich (122) der Trägerfolie (110) auf der Abdeckfolie (136) abgelegt wird. Das Substrat (130) ist damit mittels der Trägerfolie (110) quasi eingeschlagen.

Die nun beispielsweise doppellagige Trägerfolie (110) wird mittels der ersten Fördervorrichtung (40) getaktet in der Förderrichtung (5) transportiert. Die Fördervorrichtung (40) ist hierbei beispielsweise so aufgebaut, wie im Zusammenhang mit dem ersten und zweiten Ausführungsbeispiel beschrieben.

Mittels einer ersten Trennvorrichtung (50) werden Laminatverbünde (141) vereinzelt, die dann an eine Packstation (60) übergeben werden. Die Breite des Laminatverbunds (141) und das Verhältnis der Überlappung (121) zu dieser Breite entsprechen den vorherigen Ausführungsbeispielen. Das zu verpackende Gut wird an der Packstation (60) zwischen zwei Packstoffbahnen (61, 62) geführt, die anschließend miteinander z.B. verschweißt werden. Anschließend werden Siegelrandbeutel (160) vereinzelt. Die Trennvorrichtungen (50, 100), die Packstation (60) und die Siegelstation (80) sind beispielsweise so aufgebaut, wie im Zusammenhang mit den vorhergehenden Ausführungsbeispielen beschrieben.

Im Siegelrandbeutel (160) bildet der über dem Substrat (130) und der Abdeckfolie (136) liegende Teil des Trägerfolienabschnitts (116) einen Zwischenkörper (165), der die freie Oberfläche (133) des Substrats (130) umgibt. Er verhindert eine Berührung zwischen dem Packstoff (61, 62) und dem Substrat (130).

Bei der Entnahme des Substrats (130) aus dem Siegelrandbeutel (160) ist dieses zunächst weiterhin von dem Trägerfolienabschnitt (116) umgeben. Der Trägerfolienabschnitt (116) kann somit nicht unbeabsichtigt herausfallen. Mit dem Auseinanderziehen der Teil-Trägerfolienabschnitte (117, 118) im Bereich der Überlappung (121) kann das Substrat (130) freigelegt und angewendet, z.B. auf die Haut aufgeklebt werden.

In den Figuren 12 und 13 ist eine weitere Variante dargestellt. Die zweiteilige Trägerfolie (110) mit den darauf sitzenden, mit jeweils einer Abdeckfolie (136) versehenen Substraten (130) ist zunächst so ausgebildet, wie im Zusammenhang mit dem ersten und zweiten Ausführungsbeispiel beschrieben.

Vor dem Passieren der ersten Fördervorrichtung (40) wird eine Schutzfolie (150) zugeführt. Dies erfolgt, wie im Zusammenhang mit dem zweiten Ausführungsbeispiel beschrieben. Im Ausführungsbeispiel der Figuren 12 und 13 entspricht die Breite der Schutzfolie (150) in der Breitenrichtung (6) der Breite der Trägerfolie (110) in der gleichen Richtung.

Zwischen der Umlenkwalze (23) und der Fördervorrichtung (40) ist einseitig eine Fügevorrichtung (25) angeordnet. Diese hat ein Oberwerkzeug (27) und ein Unterwerkzeug (26), die in einer Zustellrichtung (28) normal zueinander und in der Gegenrichtung verfahrbar sind. In der geschlossenen Position der Fügewerkzeuge (26, 27) werden die Trägerfolie (110) und die Schutzfolie (150) miteinander gefügt, beispielsweise werden sie miteinander verschweißt. Die hierbei eingesetzten Fügeverfahren können beispielsweise Ultraschallschweißen, Rotationsreibschweißen, Heizelementschweißen, Laserschweißen, etc. sein. Auch ein Falzen oder Prägen der Folien gegeneinander oder ein Verkleben mittels eines Silikonklebers sind denkbar. Die in der Förderrichtung (5) orientierte Länge der Fügenaht (29) entspricht beispielsweise der Teilung der Substrate (130) auf der Trägerfolie (110). Das Fügen kann während des Stillstands der Fördervorrichtung (40) oder während des Förderns erfolgen. Im letztgenannten Fall ist die Fügevorrichtung (25) in der Förderrichtung (5) und entgegen der Förderrichtung (5) verfahrbar.

Das Vereinzeln der Laminatverbünde (141) erfolgt, wie im Zusammenhang mit den vorigen Ausführungsbeispielen beschrieben. Der so hergestellte Laminatverbund (141) ist in der Figur 13 dargestellt. Das Substrat (130), dessen Kanten hier gestrichelt als unsichtbare Linie angedeutet sind, ist vollständig verdeckt zwischen der Trägerfolie (110) und der Schutzfolie (150) angeordnet.

Das Verpacken der Laminatverbünde (141) erfolgt, wie im Zusammenhang mit dem zweiten Ausführungsbeispiel beschrieben. Im Siegelrandbeutel (160) bildet die Schutzfolie (150) den Zwischenkörper (165), der ein Anhaften des Substrats (130) an den Packstoffbahnen (61, 62) verhindert. Beim Entnehmen des Substrats (130) aus den Siegelrandbeuteln (160) wird der Trägerfolienabschnitt (116) und der daran befestigte Schutzfolienabschnitt (151) mit entnommen. Diese Folienabschnitte (116, 151) haften nicht an den Packstoffen (162 163), sodass eine problemlose Entnahme gewährleistet ist. Vor dem Anwenden des Substrats (130) werden der Transportfolienabschnitt (116) und der Schutzfolienabschnitt (151) abgezogen. Anschließend kann das Substrat (130) angewendet werden.

Dieses Verfahren kann auch bei einem mehrnutzigen Einsatz angewendet werden. Hierbei werden beispielsweise parallel zueinander mehrere Laminatverbünde (130) hergestellt und in Siegelrandbeutel (160) verpackt.

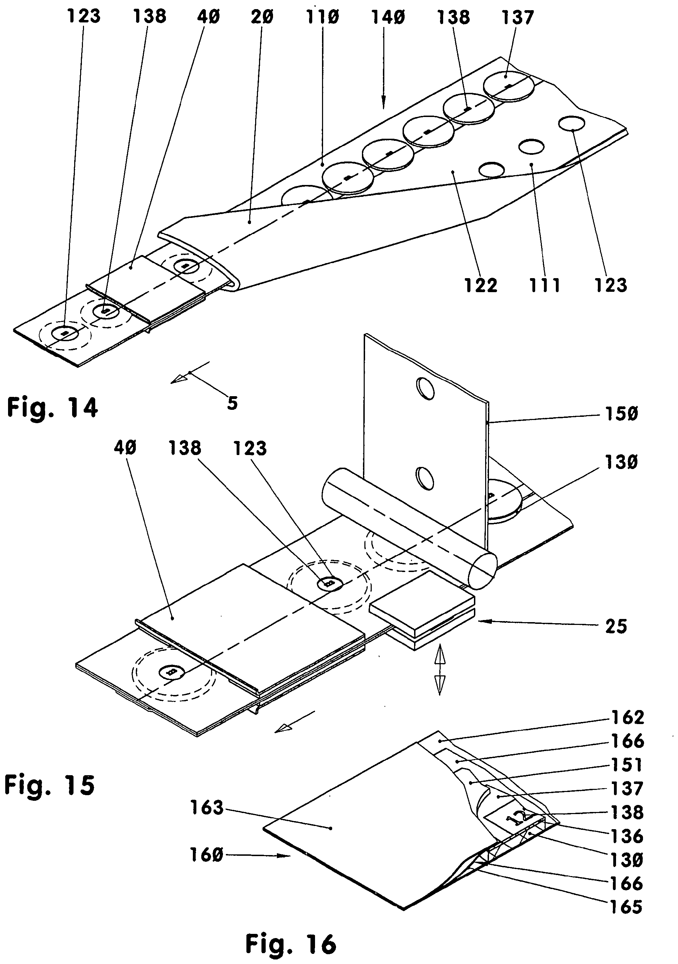

Die Figur 14 zeigt eine Variante des in der Figur 11 dargestellten Ausführungsbeispiels. Die Abdeckfolie (136) trägt eine Beschriftung (138), die beispielsweise die Charge des Substrats (130) kennzeichnet. Auch eine individuelle Kennzeichnung jedes Substrats (130) ist denkbar. Diese Beschriftung (138) wird beispielsweise im Verfahrensablauf nach dem Aufbringen der mit der Abdeckfolie (136) versehenen Substrate (130) auf die Trägerfolie (110) aufgebracht.

Der äußere Bereich (122) der Trägerfolie (110) weist Durchbrüche (123) auf, deren Teilung der Teilung der Substrate (130) auf der Trägerfolie (110) entsprechen. Sie liegen auf einer Parallelen zu vertikalen Mittenlängsebene der Substrate (130). In der Breitenrichtung (6) ist jeweils ein Durchbruch (123) neben einem Substrat (130) angeordnet. Der Durchmesser eines Durchbruchs (123) ist kleiner als der Durchmesser der Abdeckfolie (136).

In der Umlenkvorrichtung (20) wird der äußere Bereich (122) der Trägerfolie (110) so umgelenkt, dass jeweils ein Durchbruch (123) auf einer Abdeckfolie (136) liegt. Die Beschriftung (138) ist damit durch den über dem Substrat (130) liegenden äußeren Bereich (122) der Trägerfolie (110) hindurch sichtbar und lesbar.

Das Vereinzeln der Laminatverbünde (141) und das Verpacken erfolgt, wie im Zusammenhang mit dem Ausführungsbeispiel der Figur 11 beschrieben. Im Siegelrandbeutel (160) bildet auch in diesem Ausführungsbeispiel der äußere Bereich (122) einen Zwischenkörper (165), der ein Verkleben der freien Flächen (133) des Substrats (130) mit den Packstoffen (162, 163) verhindert.

Beim Entnehmen aus dem Siegelrandbeutel (160) entnimmt der Anwender den Trägerfolienabschnitt (116) mit dem darin eingewickelten Substrat (130). Noch vor dem Freilegen des Substrats (130) kann er durch den Durchbruch (123) hindurch die Beschriftung (138) der Abdeckfolie (136), z.B. das Herstellungs- oder Haltbarkeitsdatum lesen. Das Lösen des Substrats (130) aus der Trägerfolie (110) erfolgt wie oben beschrieben.

Bei diesem Verfahren ist es auch denkbar, die Kennzeichnung (138) unmittelbar vor dem Verpacken aufzubringen. In diesem Fall erfolgt die Beschriftung (138) beispielsweise mittels eines Thermodruckers durch den Durchbruch (123) hindurch auf die Abdeckfolie (136).

Die Figuren 15 und 16 zeigen eine Variante des in den Figuren 12 und 13 dargestellten Ausführungsbeispiels. In diesen Darstellungen sind die Durchbrüche (123) in der Schutzfolie (150) angeordnet, die an der Umlenkwalze (23) auf die mit je einer Abdeckfolie (136) versehenen Substrate (130) aufgelegt wird. Auch in diesem Ausführungsbeispiel trägt die Abdeckfolie (136) eine Beschriftung (138) bzw. eine Kennzeichnung (138).

Das Verbinden der Schutzfolie (150) mit der Trägerfolie (110), das Vereinzeln der Laminatverbünde (141), das Verpacken, das Versiegeln und das Abtrennen der Siegelrandbeutel (160) erfolgt, wie im Zusammenhang mit dem Ausführungsbeispiel der Figuren 12 und 13 beschrieben.

Die Figur 16 zeigt einen Teil-Längsschnitt des mittels dieses Verfahrens hergestellten Siegelrandbeutels (160). Die Schutzfolie (150) liegt zwischen der freien Oberfläche (133) des Substrats (130) und den Packstoffen (162, 163), sodass ein Verkleben des Substrats (130) mit dem Siegelrandbeutel (160) verhindert wird. Bei einem transparenten Packstoff (162, 163) kann die Beschriftung (138) der Abdeckfolie (136) durch den Packstoff (162, 163) hindurch lesbar sein. Dies kann beispielsweise bei einer automatisierten Sortierung eingesetzt werden.

Nach dem Öffnen, z.B. einem Aufreißen, des Siegelrandbeutels (160) entnimmt der Anwender das mittels des Trägerfolienabschnitts (116) und des Schutzfolienabschnitts (151) zusätzlich verpackte Substrat (130). Noch vor dem Auspacken des Substrats (130) kann die Kennzeichnung (138) geprüft werden. Auch können zusätzliche Kennzeichnungen angebracht werden, wie zum Beispiel die Uhrzeit des Öffnens, die Tageszeit der Anwendung, etc.

Die Figuren 17 und 18 zeigen ein weiteres Ausführungsbeispiel. Das Substrat (130) sitzt beispielsweise mittig auf der Trägerfolie (110), wie im Zusammenhang mit den in den Figuren 1 - 10 dargestellten Ausführungsbeispielen beschrieben. Mittels einer ersten Fördervorrichtung (40) wird die Trägerfolie (110) mit dem darauf haftenden, mit einer Abdeckfolie (136) versehenen Substrat (130) in der Förderrichtung (5) zu einer Trennvorrichtung (50) transportiert. An dieser werden die Laminatverbünde (141) vereinzelt. Ein Laminatverbund (141) umfasst einen Transportfolienabschnitt (116), das darauf klebende Substrat (130) und die auf dem Substrat (130) klebende Abdeckfolie (136).

Zum Verpacken werden auch in diesem Ausführungsbeispiel eine untere Packstoffbahn (61) und eine obere Packstoffbahn (62) eingesetzt. In der Darstellung der Figur 17 ist oberhalb der oberen Packstoffbahn (62) eine Spendierstation (70) angeordnet. An dieser Spendierstation (70) wird ein Schutzfolienabschnitt (151) von einer Trägerbahn (71) auf die obere Packstoffbahn (62) aufgegeben. Der einzelne Schutzfolienabschnitt (151) ist beispielsweise so ausgebildet, dass seine der oberen Packstoffbahn (62) zugewandte Oberfläche (152) an der oberen Packstoffbahn (62) haftet. Die der oberen Packstoffbahn (62) abgewandte Oberfläche ist zumindest dem klebstoffhaltigen Substrat (130) gegenüber dehäsiv ausgebildet. Die Länge des einzelnen Schutzfolienabschnitts (151) entspricht beispielsweise der Länge eines Trägerfolienabschnitts (116).

Zwischen die obere Packstoffbahn (62) mit dem daran haftenden Schutzfolienabschnitt (151) und die untere Packstoffbahn (61) wird an der Packstation (60) um den Laminatverbund (141) eingelegt. Der Laminatverbund (141) liegt dann auf der unteren Packstoffbahn (61). Der Schutzfolienabschnitt (151) überdeckt den Trägerfolienabschnitt (116) mit dem Substrat (130). In den Randbereichen und in der zweiten Förderrichtung (7) vor und hinter dem Trägerfolienabschnitt (116) liegen die obere Packstoffbahn (62) und die untere Packstoffbahn (61) aneinander an.

In der Transportrichtung (7) ist der Packstation (60) eine Förder- und Siegelstation (80, 90) nachgeschaltet. Diese ist so aufgebaut, wie im Zusammenhang mit den ersten beiden Ausführungsbeispielen beschrieben. Mittels einer zweiten Trennvorrichtung (100) werden die einzelnen verschlossenen Siegelrandbeutel (160) abgetrennt.

In der Figur 18 ist ein derartiger Siegelrandbeutel (160) in einem isometrischen Teillängsschnitt dargestellt. Auf der unteren Packstoffbahn (61) liegt der Laminatverbund (141) auf. Auf dem Laminatverbund (141) liegt die obere Packstoffbahn (62) mit dem daran haftenden Schutzfolienabschnitt (151). Dieser Schutzfolienabschnitt (151) bildet in diesem Ausführungsbeispiel den Zwischenkörper (165), der einen Kontakt zwischen der freien Oberfläche (133) des Substrats (130) und den Packstoffen (162, 163) verhindert.

Nach dem Aufreißen des Siegelrandbeutels (160) wird der Laminatverbund (141) entnommen. Der Schutzfolienabschnitt (151) verbleibt im Siegelrandbeutel (160). Nach dem Abziehen des Trägerfolienabschnitts (116) kann das Substrat (130) z.B. auf die Haut aufgeklebt werden.

Auch Kombinationen der genannten Ausführungsbeispiele sind denkbar.

### Bezugszeichenliste:

- 5: Förderrichtung, erste Förderrichtung, Materialflussrichtung
- 6: Breitenrichtung
- 7: Transportrichtung, zweite Förderrichtung

- 10: Vorrichtung zum Verpacken

- 20: Ablenkvorrichtung, Umlenkvorrichtung
- 21: Leitfläche
- 22: Bogenabschnitt
- 23: Umlenkwalze

- 25: Fügevorrichtung
- 26: Unterwerkzeug
- 27: Oberwerkzeug
- 28: Zustellrichtung
- 29: Fügenaht

- 30: Umformvorrichtung, Prägevorrichtung
- 31: Stempelverbund
- 32: Stempel

- 34: Matrize
- 35: Ausnehmungen
- 36: Grundfläche
- 37: Kegelspitze

- 40: Fördervorrichtung, erste Fördervorrichtung
- 41: Transportbacken
- 42: Löserichtung
- 50: Trennvorrichtung, erste Trennvorrichtung
- 51: Querschneidmesser

- 60: Packstation
- 61: untere Packstoffbahn
- 62: obere Packstoffbahn

- 70: Spendierstation
- 71: Trägerbahn

- 80: Siegelstation
- 81: Siegelwerkzeuge

- 90: zweite Fördervorrichtung

- 100: Trennvorrichtung, zweite Trennvorrichtung

- 110: Trägerfolie, release liner, Transportfolie
- 111: Oberfläche von (110)
- 112: Teil-Trägerfolie
- 113: Teil-Trägerfolie
- 114: Noppen
- 115: Noppenkreis
- 116: Trägerfolienabschnitt, Transportfolienabschnitt
- 117: Teil-Trägerfolienabschnitt
- 118: Teil-Trägerfolienabschnitt
- 119: Transportsteg

- 121: Überlappung
- 122: äußerer Bereich von (110)
- 123: Durchbrüche

- 130: Substrat
- 131: Stirnfläche
- 132: Stirnseite
- 133: freie Oberfläche von (130), Mantelfläche von (130)

- 136: Abdeckfolie, backing layer
- 137: Oberfläche von (136)
- 138: Beschriftung, Kennzeichnung

- 140: Laminatverbundbahn
- 141: Laminatverbund, zu verpackendes Gut

- 150: Schutzfolie
- 151: Schutzfolienabschnitt
- 152: Oberfläche von (151)

- 160: Siegelrandbeutel
- 161: Siegelnaht
- 162: unterer Packstoff
- 163: oberer Packstoff

- 165: Zwischenkörper
- 166: Oberfläche von (165)

## Patentansprüche

1. Verfahren zur Herstellung eines Siegelrandbeutels (160) mit einem darin gelagerten Laminatverbund (141),
- wobei der einzelne Laminatverbund (141) von einer eine Trägerfolie (110) mit darauf angeordneten, mittels jeweils einer Abdeckfolie (136) abgedeckten zumindest klebstoffhaltigen Substraten (130) aufweisenden Laminatverbundbahn (140) abgetrennt wird,
- wobei mindestens ein Zwischenkörper (165) der Laminatverbundbahn (140)
oder dem Laminatverbund (141) zugeführt wird oder in die Trägerfolie (110) der Laminatverbundbahn (140) eingeformt wird, sodass der oder die Zwischenkörper (165) sämtliche freie Oberflächen (133) des Substrats (130) zumindest bereichsweise umgeben,
- wobei der Laminatverbund (141) und sämtliche Zwischenkörper (165) zwischen zwei Packstoffbahnen (61, 62) eingeführt werden,
- wobei die Packstoffbahnen (61, 62) miteinander versiegelt werden und
- wobei hieraus Siegelrandbeutel (160) vereinzelt werden.

2. Verfahren nach Anspruch 1, **dadurch gekennzeichnet, dass** das Versiegeln während des Förderns mittels einer zweiten Fördervorrichtung (90) erfolgt.

3. Verfahren nach Anspruch 1, **dadurch gekennzeichnet, dass** die dem Substrat (130) zugewandte Oberfläche (166) des Zwischenkörpers (165) die gleichen Hafteigenschaften hat wie die dem Substrat (130) zugewandte Oberfläche (111) der Trägerfolie (110).

4. Verfahren nach Anspruch 1, **dadurch gekennzeichnet, dass** die Abdeckfolie (136) beschriftet wird.

5. Vorrichtung (10) zur Herstellung von Siegelrandbeuteln (160) gemäß dem Verfahren nach Anspruch 1, wobei
- mittels einer ersten Fördervorrichtung (40) eine Laminatverbundbahn (140), die eine Trägerfolie (110) und darauf sitzende, mit jeweils einer Abdeckfolie (136) versehene, zumindest klebstoffhaltige Substrate (130) aufweist, förderbar ist,
- mittels einer ersten Trennvorrichtung (50) jeweils mindestens ein Substrat (130) aufweisende Laminatverbünde (141) von der Laminatverbundbahn (140) abtrennbar sind,
- mittels einer Umformvorrichtung (30; Zwischenkörper (165) in die Trägerfolie (110) der Laminatverbundbahn (140) einformbar sind oder die Vorrichtung (10) eine Umlenkvorrichtung (20) aufweist, sodass die Laminatverbundbahn (140) oder ein Laminatverbund (141) mittels eines Zwischenkörpers (165) überdeckbar sind,
- an einer Packstation (60) die Laminatverbünde (141) einschließlich der/die Zwischenkörper (165) zwischen zwei Packstoffbahnen (61, 62) einführbar sind,
- an einer Siegelstation (80) die beiden Packstoffbahnen (61, 62) außerhalb der projizierten Fläche des Laminatverbunds (141) miteinander fügbar sind,
- die gefügten Packstoffbahnen (61, 62) mittels einer zweiten Fördervorrichtung (90) förderbar sind und
- mittels einer zweiten Trennvorrichtung (100) mit jeweils einem Laminatverbund (141) befüllte Siegelrandbeutel (160) abtrennbar sind.

6. Vorrichtung (10) nach Anspruch 5, **dadurch gekennzeichnet, dass** die erste Fördervorrichtung (40) und die zweite Fördervorrichtung (90) Unstetigförderer sind, wobei der Hub pro Takt der zweiten Fördervorrichtung (90) größer ist als der Hub pro Takt der ersten Fördervorrichtung (40).

7. Vorrichtung (10) nach Anspruch 5, **dadurch gekennzeichnet, dass** die erste Fördervorrichtung (40) mit der Umformvorrichtung (30) kombiniert ist.

8. Vorrichtung (10) nach Anspruch 5, **dadurch gekennzeichnet, dass** sie eine Beschriftungsstation umfasst.

## Claims

1. A method for producing a sealed-edge pouch (160) with a laminate composite (141) stored therein,
- wherein the individual laminate composite (141) is detached from a laminate composite web (140) having a carrier film (110) with at least adhesive-containing substrates (130) which are arranged thereon and are covered by means of a respective cover film (136),
- wherein at least one intermediate body (165) is supplied to the laminate composite web (140) or to the laminate composite (141) or is moulded into the carrier film (110) such that the intermediate body or the intermediate bodies (165) surrounds/surround all of the free surfaces (133) of the substrate (130) at least in regions,
- wherein the laminate composite (141) and all of the intermediate bodies (165) are introduced between two packaging material webs (61, 62),
- wherein the packaging material webs (61, 62) are sealed to each other, and
- wherein sealed-edge pouches (160) are separated therefrom.

2. The method according to claim 1, **characterized in that** the sealing takes place during the conveying by means of a second conveyor device (90).

3. The method according to claim 1, **characterized in that** that surface (166) of the intermediate body (165) which faces the substrate (130) has the same adhesive properties as that surface (111) of the carrier film (110) which faces the substrate (130).

4. The method according to claim 1, **characterized in that** the cover film (136) is labelled.

5. A device (10) for producing sealed-edge pouches (160) as per the method according to claim 1, wherein
- a laminate composite web (140) which has a carrier film (110) and at least adhesive-containing substrates (130) which sit on the latter and are each provided with a cover film (136) is adapted to be conveyed by means of a first conveyor device (40),
- laminate composites (141) each having at least one substrate (130) are adapted to be detached from the laminate composite web (140) by means of a first separating device (50),
- intermediate bodies (165) are adapted to be moulded into the carrier film (110) of the laminate composite web (140) by means of a forming device (30), or the device (10) has a deflecting device (20) such that the laminate composite web (140) or a laminate composite (141) is adapted to be overlapped by means of an intermediate body (165),
- the laminate composites (141) including the intermediate body/bodies (165) are adapted to be introduced between two packaging material webs (61, 62) at a packaging station (60),
- the two packaging material webs (61, 62) are adapted to be joined to each other outside the projected area of the laminate composite (141) at a sealing station (80),
- the joined packaging material webs (61, 62) are adapted to be conveyed by means of a second conveyor device (90), and
- sealed-edge pouches (160) each filled with a laminate composite (141) are adapted to be detached by means of a second separating device (100).

6. The device (10) according to claim 5, **characterized in that** the first conveyor device (40) and the second conveyor device (90) are non-continuous conveyors, wherein the stroke per cycle of the second conveyor device (90) is larger than the stroke per cycle of the first conveyor device (40).

7. The device (10) according to claim 5, **characterized in that** the first conveyor device (40) is combined with the forming device (30).

8. The device (10) according to claim 5, **characterized in that** it comprises a labelling station.

## Revendications

1. Procédé de fabrication d'un sachet à bords soudés (160) avec un stratifié (141) disposé à l'intérieur,
- dans lequel le stratifié individuel (141) est détaché d'une bande de stratifié (140) comportant un film porteur (110) ayant, disposés sur celui-ci, des substrats (130) contenant au moins un adhésif et recouverts respectivement au moyen d'un film de protection (136),
- dans lequel au moins un corps intermédiaire (165) est apporté à la bande de stratifié (140) ou au stratifié (141) ou est mis en forme dans le film porteur (110) de la bande de stratifié, de sorte que le ou les corps intermédiaire(s) (165) entourent toutes les surfaces libres (133) du substrat (130) au moins par endroits,
- dans lequel le stratifié (141) et tous les corps intermédiaires (165) sont insérés entre deux bandes de matériau d'emballage (61, 62),
- dans lequel les bandes de matériau d'emballage (61, 62) sont soudées l'une à l'autre et
- dans lequel les sachets à bord soudé (160) sont séparés à partir de là.

2. Procédé selon la revendication 1, **caractérisé en ce que** la séparation s'effectue pendant le transport au moyen d'un deuxième dispositif transporteur (90).

3. Procédé selon la revendication 1, **caractérisé en ce que** la surface (166) du corps intermédiaire (165) tournée vers le substrat (130) a les mêmes propriétés d'adhérence que la surface (111) du film porteur (110) tournée vers le substrat (130).

4. Procédé selon la revendication 1, **caractérisé en ce que** le film de protection (136) est étiqueté.

5. Dispositif (10) de fabrication de sachets à bords soudés (160) conformément au procédé selon la revendication 1, dans lequel
- une bande de stratifié (140), laquelle comporte un film porteur (110) et des substrats (130) posés sur celui-ci contenant au moins un adhésif et prévus respectivement avec un film de protection (136), est transportable au moyen d'un premier dispositif transporteur (40),
- des stratifiés (141) comportant respectivement au moins un substrat (130) sont séparables de la bande de stratifié (140) au moyen d'un premier dispositif séparateur (50),
- des corps intermédiaires (165) peuvent être mis en forme dans le film porteur (110) de la bande de stratifié (140) au moyen d'un dispositif de mise en forme (30) ou le dispositif (10) comporte un dispositif de déviation (20) de sorte que la bande de stratifié (140) ou un stratifié (141) peuvent être recouverts au moyen d'un corps intermédiaire (165),
- les stratifiés (141), y compris le(s) corps intermédiaire(s) (165) sont insérables entre deux bandes de matériau d'emballage (61, 62) à une station d'emballage (60),
- les deux bandes de matériau d'emballage (61, 62) peuvent être assemblées l'une à l'autre à l'extérieur de la surface projetée du stratifié (141) à une station de soudage (80),
- les bandes de matériau d'emballage (61, 62) assemblées sont transportables au moyen d'un deuxième dispositif transporteur (90) et
- les sachets à bords soudés (160) remplis respectivement avec un stratifié (141) sont séparables au moyen d'un deuxième dispositif séparateur (100).

6. Dispositif (10) selon la revendication 5, **caractérisé en ce que** le premier dispositif transporteur (40) et le deuxième dispositif transporteur (90) sont des transporteurs discontinus, dans lequel le nombre de courses par cycle du deuxième dispositif transporteur (90) est supérieur au nombre de courses par cycle du premier dispositif transporteur (40).

7. Dispositif (10) selon la revendication 5, **caractérisé en ce que** le premier dispositif transporteur (40) est combiné avec le dispositif de mise en forme (30) .

8. Dispositif (10) selon la revendication 5, **caractérisé en ce qu'**il comprend une station d'étiquetage.
